# EUROPÄISCHE PATENTSCHRIFT

(11) **EP 2 861 323 B1**
(45) Veröffentlichungstag und Bekanntmachung des Hinweises auf die Patenterteilung: **04.12.2019**
(21) Anmeldenummer: 13729016.9
(22) Anmeldetag: 12.06.2013
(51) Int. Cl.: B01D 53/04, B60T 17/00

(54) **LUFTTROCKNERPATRONE UND VERFAHREN ZUR HERSTELLUNG EINER LUFTTROCKNERPATRONE**
AIR DRYER CARTRIDGE AND AIR DRYER CARTRIDGE PRODUCTION METHOD
CARTOUCHE DE SÉCHEUR D'AIR ET PROCÉDÉ DE FABRICATION D'UNE CARTOUCHE DE SÉCHEUR D'AIR

(30) Priorität: 13.06.2012 DE 102012105137
(43) Veröffentlichungstag der Anmeldung: 22.04.2015
(73) Patentinhaber: KNORR-BREMSE Systeme für Nutzfahrzeuge GmbH, 80809 München (DE)
(72) Erfinder: SCHAEBEL, Stefan, 80804 München (DE); ROTTER, Peter, 83026 Rosenheim (DE); RAAB, Andreas, 80997 München (DE)
(86) Internationale Anmeldenummer: PCT/EP2013/062094
(87) Internationale Veröffentlichungsnummer: WO 2013/186243

(56) Entgegenhaltungen:
- DE-A1-102005 003 543
- DE-A1-102008 035 965

## Beschreibung

Die vorliegende Erfindung betrifft eine Lufttrocknerpatrone für eine Luftaufbereitungsanlage, insbesondere für eine Druckluftaufbereitungsanlage eines Nutzfahrzeugs, mit einem Trockenmittel. Eine solche Lufttrocknerpatrone ist aus DE 102008035965 A bekannt.

Die vorliegende Erfindung betrifft weiterhin ein Verfahren zur Herstellung einer erfindungsgemäßen Lufttrocknerpatrone.

Von einem Kompressor zur Herstellung von Druckluft verdichtete Luft muss üblicherweise weiter aufbereitet werden, um einen störungsfreien Betrieb von mit der Druckluft versorgten Druckluftverbrauchern zu gewährleisten. Bei der Aufbereitung wird die Druckluft von Öl- und Schmutzpartikel gereinigt und vorhandene Feuchtigkeit abgeschieden. Zu diesem Zweck verfügen beispielsweise Luftaufbereitungsanlagen von Nutzfahrzeugen über Lufttrocknerpatronen, die Öl-, Schmutzpartikel und Feuchtigkeit aufnehmen können.

Um der erzeugten Druckluft Feuchtigkeit zu entnehmen, ist in der Lufttrocknerpatrone ein durchströmbarer Behälter angeordnet, der mit Trockenmittel in Granulatform gefüllt ist. Der Behälter kann mit einem beweglichen Deckel verschlossen sein, wobei auf den Deckel mit Hilfe eines Federelementes eine Kraft ausgeübt werden kann, die verhindert, dass sich die Granulatkugeln des Trockenmittels bei Vibrationen gegenseitig aufreiben und es zur Bildung von Stäuben kommt. Durch Vibrationen kann weiterhin eine Verdichtung des Granulats auftreten, wodurch es zu einer unerwünschten Reduzierung des von dem Granulat beanspruchten Raumes in dem Behälter kommt. Diese Verdichtung des Granulats erlaubt eine erhöhte Beweglichkeit einzelner Granulatkugeln am oberen Rand des Behältnisses, wodurch Stäube durch das Aufreiben entstehen können. Die Volumenreduzierung des Granulats kann ausgeglichen werden, da der Deckel auf Grund der auf ihn ausgeübten Federkraft nachrutschen kann. Die verbleibende Federkraft ist in der Regel ausreichend, um auch weiterhin eine Staubbildung durch das Aufreiben der Granulatkugeln zu verhindern. Bei ungünstigen Einsatzbedingungen, beispielsweise bei einem hohen Luftverbrauch durch angeschlossene Druckluftverbraucher mit einem daraus resultierenden sogenannten "Nassfahren" der Lufttrocknerpatrone kann es dennoch zu einer verstärkten Staubbildung des Trockenmittels kommen.

Um bei der Staubbildung entstehende kleinere Granulatkugeln beziehungsweise Granulatbruch zurückzuhalten, wird im Boden des Behälters sowie zwischen dem Granulat und dem Deckel des Behälters ein Filter verbaut oder der Boden des Behälters und der Deckel des Behälters weisen eine entsprechend feine Siebstruktur auf, so dass auf Filter verzichtet werden kann.

Der vorliegenden Erfindung liegt die Aufgabe zugrunde, den Aufbau einer Lufttrocknerpatrone zu vereinfachen.

Diese Aufgabe wird durch die Merkmale der unabhängigen Ansprüche gelöst.

Vorteilhafte Weiterbildungen und Ausgestaltungen der Erfindung sind in den abhängigen Ansprüchen angegeben.

Die Erfindung baut auf der gattungsgemäßen Lufttrocknerpatrone dadurch auf, dass das Trockenmittel als eine Beschichtung einer Struktur im Inneren der Lufttrocknerpatrone angeordnet ist. Auf dieser Weise kann auf einen Deckel und auf ein Federelement zum Anpressen des Deckels verzichtet werden, da das Trockenmittel nicht in Granulatform verwendet wird. Weiterhin kann auf diese Weise Granulatbruch und kleine Granulatkugeln in dem Behälter verhindert werden, so dass auch auf bekannte Filter und/oder Siebe an Deckel und/oder Boden verzichtet werden kann. Ebenfalls ist eine unerwünschte Verdichtung, die zu einem erhöhten Staudruck führt praktisch ausgeschlossen. Durch den Wegfall des Deckels und des Federelementes kann die Struktur so gestaltet sein, dass sie den oberen Bereich der Lufttrocknerpatrone nahezu vollständig ausfüllt. Die Lufttrocknerpatrone kann daher bei gleichen Außenmaßen mehr Bauraum für die Struktur zur Verfügung stellen als bei einer Trockenmittelpatrone zur Verfügung gestellt wird, die Trockenmittel in Granulatform umfasst. Auf diese Weise kann die Trocknungsleistung einer Lufttrocknerpatrone bei gleichen Abmessungen erhöht werden oder die äußeren Abmessungen einer Lufttrocknerpatrone, beispielsweise die Höhe der Trockenmittelpatrone, bei gleicher Trocknungsleistung reduziert werden, so dass Bauraum eingespart werden kann. Da das Trockenmittel in Form einer Beschichtung einer Struktur und nicht in Granulatform vorliegt, kann auch keine Staubbildung durch gegenseitigen Abrieb von Granulatkugeln entstehen. Beeinträchtigungen nachfolgender Druckluftverbraucher, beispielsweise eines pneumatischen Bremssystems eines Nutzfahrzeugs, durch Staub und daraus resultierende Sicherheitsrisiken können wirksam reduziert werden.

Weiterhin kann vorgesehen sein, dass die Struktur von Luft durchströmbar ist. Auf diese Weise kann die Oberfläche der Struktur, die mit dem Trockenmittel beschichtbar/beschichtet sein kann, erhöht werden.

Es kann auch vorgesehen sein, dass die Struktur offenporige Teile umfasst. Auch auf diese Weise kann die von der Struktur bereitgestellte Oberflache, die beschichtbar/beschichtet sein kann, vergrößert werden.

Nützlicherweise kann vorgesehen sein, dass die Struktur Platten umfasst. Auf diese Weise kann die Struktur aus günstig herstellbaren Teilen zusammengesetzt werden, wobei die axiale Durchströmbarkeit besonders leicht sichergestellt werden kann.

Weiterhin kann vorgesehen sein, dass die Struktur Draht umfasst. Auch auf diese Weise kann die Struktur aus günstig herstellbaren Teilen zusammengesetzt werden, wobei die axiale Durchströmbarkeit ebenfalls gewährleistet werden kann.

Nützlicherweise kann vorgesehen sein, dass die Lufttrocknerpatrone einen Träger zum Fixieren der Struktur umfasst. Die Verwendung eines Trägers, der beispielsweise eine mechanische Formstabilität der Struktur erhöhen kann, kann die Montage der Struktur in der Lufttrocknerpatrone vereinfachen.

Es kann weiterhin vorgesehen sein, dass die Lufttrocknerpatrone einen Trockenmittelbehälter zur Aufnahme der Struktur umfasst. Die Verwendung des Trockenmittelbehälters zur Aufnahme der Struktur erlaubt die einfache Anpassung bisheriger Lufttrocknerpatronen durch das Ersetzen eines mit dem Trockenmittelgranulat gefüllten Trockenmittelbehälters durch einen mit der Struktur gefüllten Trockenmittelbehälter.

Weiterhin kann vorgesehen sein, dass die Lufttrocknerpatrone ein Element umfasst, das die Struktur in der Lufttrocknerpatrone direkt oder indirekt fixiert. Durch die direkte oder indirekte Fixierung der Struktur in der Lufttrocknerpatrone kann eine mechanische Zerstörung der Struktur beziehungsweise ihrer Beschichtung, beispielsweise durch Vibrationen, verhindert werden, so dass auch langfristig die Entstehung von Stäuben verhindert werden kann.

Nützlicherweise kann vorgesehen sein, dass das Trockenmittel einen Zeolith umfasst. Künstliche oder natürliche Zeolithe können sehr gut geeignet sein, Feuchtigkeit aus der umströmenden Luft aufzunehmen.

Das gattungsgemäße Verfahren wird dadurch weiterentwickelt, dass eine Struktur mit einem Trockenmittel beschichtet wird. Auf diese Weise werden die Vorteile und Besonderheiten der erfindungsgemäßen Lufttrocknerpatrone auch im Rahmen eines Verfahrens umgesetzt.

Die Erfindung wird nun mit Bezug auf die begleitenden Zeichnungen anhand bevorzugter Ausführungsformen beispielhaft erläutert.

Es zeigen:
- Figur 1: ein dreidimensionales Schnittbild durch eine Lufttrocknerpatrone;
- Figur 2: ein dreidimensionales Schnittbild durch eine weitere Lufttrocknerpatrone;
- Figur 3: ein zweidimensionales Schnittbild durch die weitere Lufttrocknerpatrone;
- Figur 4: eine dreidimensionale Ansicht eines Trockenmittelbehälters;
- Figur 5: ein zweidimensionales Schnittbild durch eine Struktur; und
- Figur 6: eine schematische Darstellung einer Druckluftaufbereitungsanlage.

In den folgenden Zeichnungen bezeichnen gleiche Bezugszeichen gleich oder gleichartige Teile. Weiterhin werden an sich unbestimmte Begriffe, wie zum Beispiel "oben" und "unten", in der Regel in Übereinstimmung mit der Seitenorientierung zur Bezeichnung von Orientierungen verwendet.

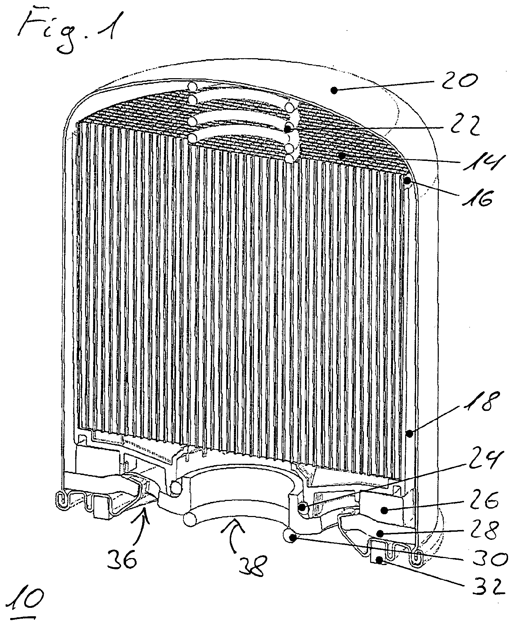

Figur 1 zeigt ein dreidimensionales Schnittbild einer Lufttrocknerpatrone 10. Die dargestellte Lufttrocknerpatrone 10 kann eine im Inneren angeordnete Struktur 14 umfassen. Die Struktur 14 kann an ihren Oberflächen zumindest teilweise mit einem Trockenmittel beschichtet sein. Die Lufttrocknerpatrone 10 kann einen Träger 16 zum Fixieren der Struktur 14 umfassen. Um die Struktur 14 im Träger 16 zu fixieren, kann beispielsweise eine Verschweißung und/oder eine Verklebung vorgesehen sein. Alternativ oder zusätzlich können die Struktur 14 und der Träger 16 auch miteinander verpresst sein.

Das Trockenmittel kann entweder vor oder nachdem die Struktur 14 durch den Träger 16 fixiert wird, auf die Struktur 14 aufgebracht werden. Als Trockenmittel kann beispielsweise ein Molekularsieb/Zeolith verwendet werden. Je nach Material der Struktur 14 kann das Trockenmittel entweder direkt auf die Struktur 14 aufgebracht werden oder es kann zunächst eine Grundschicht aus einem anderen Material aufgetragen werden, das seinerseits besser auf der Struktur 14 haftet und darüber hinaus eine geeignete Oberfläche für das Beschichten mit dem Trockenmittel bietet. Als Trockenmittel kann beispielsweise ein Zeolith in Pulverform als Grundmaterial verwendet werden. Um aus dem pulverförmigen Zeolith ein Material herzustellen, das leicht in einem Beschichtungsverfahren auf die Wabenstruktur aufgebracht werden kann, kann der pulverförmige Zeolith mit geeigneten Bindemitteln vermengt werden. Als Beschichtungsverfahren kann beispielsweise ein Tauchbad verwendet werden.

Die Lufttrocknerpatrone 10 kann weiterhin einen Trockenmittelbehälter 18 zur Aufnahme der Struktur 14 und/oder des Trägers 16 umfassen. Je nach Ausführung der Struktur 14 und/oder des Trägers 16 kann der Trockenmittelbehälter 18 optional sein und bei Bedarf entfallen. Bei entsprechender Gestaltung der Struktur 14 kann auch der Träger 16 optional sein und bei Bedarf ebenfalls entfallen. Der die Struktur 14 haltende Träger 16 und/oder die Struktur 14 können also direkt in der Lufttrocknerpatrone 10 verbaut sein. Dies kann beispielsweise durch geeignete Schnittstellen ermöglicht werden, die entweder an dem Träger 16 und/oder der Struktur 14 angeordnet sein können, wobei diese Schnittstellen eine direkte Verbindung zu anderen Bauteilen der Lufttrocknerpatrone 10, zum Beispiel der Bodenplatte 28, dem Filter 26 und/oder der ersten Dichtung 24, ermöglichen können. Der in dem Trockenmittelbehälter 18 fixierte Träger 16 zur Fixierung der Struktur 14 kann beispielsweise die Struktur 14 mechanisch gegenüber dem Trockenmittelbehälter 18 fixieren. Die Lufttrocknerpatrone 10 und/oder die Struktur 14 und/oder der Träger 16 und/oder der Trockenmittelbehälter 18 können beispielsweise zylindrisch ausgeführt sein.

Um einen Bypass zwischen dem Trockemittelbehälter 18 und dem Träger 16 zu vermeiden, kann beispielsweise eine Verpressung der Trägers 16 mit dem Trockenmittelbehälter 18 vorgesehen sein. Hierzu kann ein Durchmesser des Trägers 16 ein gewisses Übermaß von beispielsweise 2 bis 3 % im Vergleich zum entsprechenden Durchmesser des Trockenmittelbehältes 18 aufweisen. Dadurch kann eine ausreichende Abdichtung zwischen dem Träger 16 und dem Trockenmittelbehälter 18 erzielt werden. Wenn der Träger 16 entfällt und die Struktur 14 direkt in dem Trockenmittelbehälter 18 befestigt wird, kann die Struktur 14 selbst das oben genannte Übermaß gegenüber dem Trockenmittelbehälter 18 aufweisen. Auf diese Weise kann die beschichtete Struktur 14 alternativ auch direkt im Trockenmittelbehälter 18 verbaut werden. In diesem Zusammenhang kann eine Außenkontur der Struktur 14 so gestaltet sein, dass ein Bypass zwischen dem Trockenmittelbehälter 18 und der Struktur 14 vermieden oder minimiert wird. Die Außenkontur der Struktur 14 kann insofern den Träger 16 ersetzen.

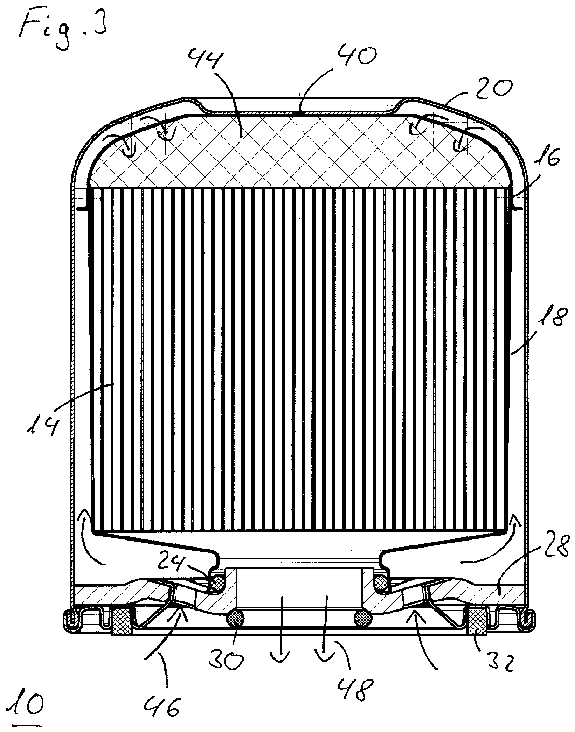

Die Lufttrocknerpatrone 10 kann weiterhin ein Patronengehäuse 20 und/oder ein Element 22 und/oder eine erste Dichtung 24 und/oder einen Filter 26 und/oder eine Bodenplatte 28 und/oder eine zweite Dichtung 30 und/oder eine dritte Dichtung 32 umfassen. Eine Abdichtung zwischen der Bodenplatte 28 und dem Trockenmittelbehälter 18 und/oder der Struktur 14 und/oder dem Träger 16 kann so gestaltet sein, dass eventuelle Fertigungstoleranzen und daraus resultierende Höhenunterschiede des Trockenmittelbehälters 18 und/oder der Struktur 14 und/oder des Trägers 16 in dem Patronengehäuse 20 ausgeglichen werden können. Beispielsweise kann diese Abdichtung durch die erste Dichtung 24 realisiert sein, die beispielsweise als ein radial dichtender O-Ring ausgeführt sein kann. Die Bodenplatte 28 kann beispielsweise gemeinsam mit dem Patronengehäuse 20 äußere Abmessungen der Lufttrocknerpatrone 10 festlegen. Die Bodenplatte 28 kann beispielsweise eine äußere Öffnung 36 zum Einströmen von Druckluft und eine zentrale Öffnung 38 zum Ausströmen von Druckluft umfassen. Im Zusammenhang mit Figur 3 wird exemplarisch noch genauer auf eine mögliche Luftführung im Inneren der Lufttrocknerpatrone 10 eingegangen. Die Struktur 14 kann im Inneren der Lufttrocknerpatrone 10 durch das Element 22 mechanisch gegenüber dem Patronengehäuse 20 und/oder der Bodenplatte 28 festgelegt sein. Das Element 22 kann beispielsweise als elastisches Federelement, insbesondere in Form einer einfachen Schrauben-/Druckfeder, ausgebildet sein. Alternativ oder zusätzlich kann das Element 22 ein Distanzstück aus Gummi und/oder eine Tellerfeder umfassen, die eine elastische Festlegung der Struktur 14 gegenüber dem Patronengehäuse 20 und/oder der Bodenplatte 28 zumindest unterstützen kann oder die elastische Festlegung der Struktur 14 vollständig realisiert. Möglich ist, dass die Festlegung der Struktur 14 durch das Element 22 direkt durch das Herstellen einer elastischen Kopplung zwischen der Struktur 14 und/oder dem Träger 16 und/oder dem Trockenmittelbehälter 18 einerseits und dem Patronengehäuse 20 andererseits erfolgt. Durch das Element 22 kann der Träger 16 und/oder die Struktur 14 in der Lufttrocknerpatrone 10 gegen Vibrationen geschützt werden, um mechanische Belastungen, die beispielsweise zu einem ein Ablösen von Trockenmittel von der Struktur 14 führen können, zu vermeiden. Das Element 22 kann eine stetige nach unten weisende Axialkraft auf die Struktur 14 und/oder den Träger 16 und/oder den Trockenmittelbehälter 18 ausüben, wodurch Vibrationen vermieden werden. Verglichen mit Lufttrocknerpatronen 10, die als Trockenmittel ein Granulat verwenden, kann das Element 22 mit kleineren Dimensionen/Abmessungen gewählt werden, da kein Nachrutschen eines Granulats auftritt und somit eine geringere Axialkraft ausreichend ist.

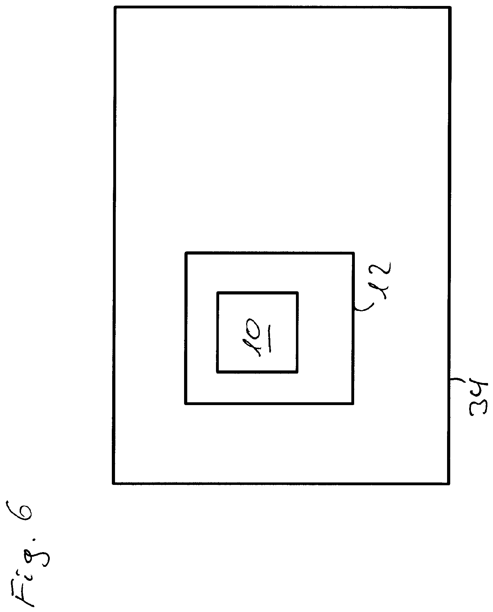

Das Element 22 kann beispielsweise in eine Vertiefung der Struktur 14 hineinragen, um eine Vorpositionierung zur Erleichterung der Montage zu ermöglichen. Alternativ ist auch eine Erhöhung der Struktur 14 möglich. Zwischen dem Trockenmittelbehälter 18 und der Bodenplatte 28 können das Filter 26 und die erste Dichtung 24 angeordnet sein. Die erste Dichtung 24 kann das Ausströmen einströmender Druckluft unter Umgehung der in dem Trockenmittelbehälter 18 angeordneten Struktur 14 verhindern. Das Filter 26 kann einströmende Druckluft von Öl- und Schmutzpartikeln befreien. Die Lufttrocknerpatrone 10 kann auf ein in Figur 1 nicht dargestelltes Gehäuse einer beispielsweise in Figur 6 dargestellten Luftaufbereitungsanlage 12 montiert sein. Im montierten Zustand kann die zweite Dichtung 30 in die Lufttrocknerpatrone 10 einströmende Druckluft und aus der Lufttrocknerpatrone 10 ausströmende Druckluft voneinander trennen. Die dritte Dichtung 32 kann im montierten Zustand der Lufttrocknerpatrone 10 nach außen, das heißt zwischen der Lufttrocknerpatrone 10 und einem in Figur 1 nicht dargestellten Gehäuse einer Luftaufbereitungsanlage, abdichten.

Während einer Druckluftaufbereitungsphase kann Druckluft beispielsweise durch die äußere Öffnung 36 in der Bodenplatte 28 in die Lufttrocknerpatrone 10 eintreten. Die äußere Öffnung 36 in der Bodenplatte 28 kann insbesondere zwischen der zweiten Dichtung 30 und der dritten Dichtung 32 angeordnet sein. Die durch die äußere Öffnung in die Lufttrocknerpatrone 10 eingetretene Druckluft kann oberhalb der Bodenplatte 28 zunächst radial nach außen strömen, wobei sie durch das Filter 26 hindurchtritt. Das Filter kann geeignet sein, Öl- und Schmutzpartikel zurückzuhalten. Beim Durchtritt durch das Filter 26 kann daher die Druckluft von Öl- und Schmutzpartikeln gereinigt werden. Wenn die Druckluft das Filter 26 durchströmt hat, kann sie in axialer Richtung zwischen dem Trockenmittelbehälter 18 und dem Patronengehäuse 20 in dem Bereich über der Struktur 14 am oberen Ende des Patronengehäuses 20 strömen. Um eine Strömung von Druckluft zwischen dem Patronengehäuse 20 und dem Trockenmittelbehälter 18 in der axialen Richtung zu ermöglichen, kann der Trockenmittelbehälter 18 beispielsweise einen geringeren Außendurchmesser aufweisen als ein Innendurchmesser des Patronengehäuses 20. Beispielsweise kann der Trockenmittelbehälter 18 einen 6 mm kleineren Außendurchmesser aufweisen als der Innendurchmesser des Patronengehäuses 20. Am oberen Ende des Patronengehäuses 20 kann die Druckluft umgelenkt und in die Struktur 14 geleitet werden. Das obere Ende des Patronengehäuses 20 kann bis auf das Element 22 leer sein. Die Druckluft kann die Struktur 14 in axialer Richtung durchströmen und an ihrem unteren Ende wieder aus der Struktur 14 austreten.

Beim Durchströmen der Struktur 14 kann der Druckluft durch das auf der Oberfläche der Struktur 14 aufgebrachte Trockenmittel Feuchtigkeit einzogen werden. Druckluft die von Öl-, Schmutzpartikeln und Feuchtigkeit befreit ist, kann als aufbereitete Druckluft bezeichnet werden. Nach dem Ausströmen aus der Struktur 14 kann die aufbereitete Druckluft auch durch den Boden des Trockenmittelbehälters 18 hindurchtreten und beispielsweise durch die zentrale Öffnung 38 in der Bodenplatte 28 der Lufttrocknerpatrone 10 austreten. Die zentrale Öffnung 38 in der Bodenplatte 28 kann beispielsweise durch die zweite Dichtung 30 umfasst sein.

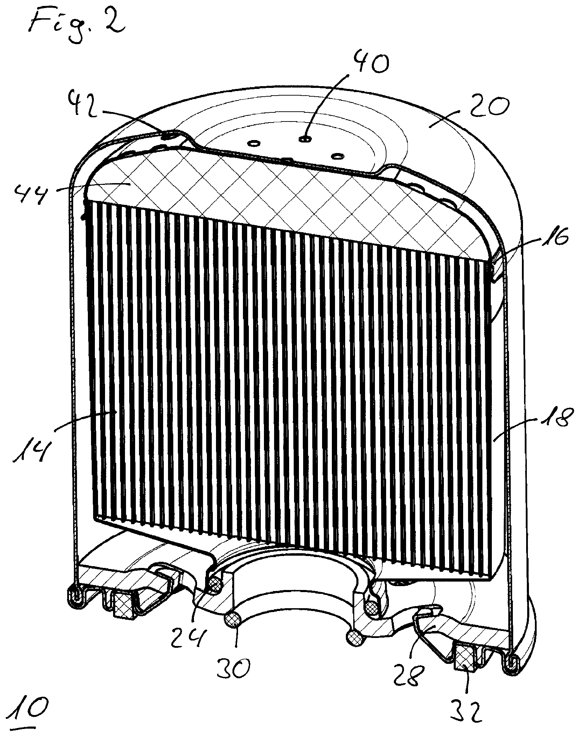

Figur 2 zeigt ein dreidimensionales Schnittbild durch eine weitere Lufttrocknerpatrone. Bei der in Figur 2 dargestellten Ausführungsform, deren Aufbau in weiten Teilen der aus Figur 1 bekannte Ausführungsform entspricht, ist der Trockenmittelbehälter 18 mithilfe eines Schweißpunktes 40 fest mit dem Patronengehäuse 20 gekoppelt und auf diese Weise gegenüber diesem festgelegt. Durch die feste Kopplung des Trockenmittelbehälters 18 mit dem Patronengehäuse 20 kann auf ein weiteres Bauteil zur Vermeidung/Dämpfung von Vibrationen verzichtet werden. Um analog zu der aus Figur 1 bekannten Ausführungsform eine Strömung von Druckluft im oberen Bereich der Lufttrocknerpatrone 10 zu ermöglichen, kann der Trockenmittelbehälter 18 eine geringere Bauhöhe als das Patronengehäuse 20 aufweisen. Beispielsweise kann die Bauhöhe des Trockenmittelbehälters 18 3 mm geringer sein als die Bauhöhe des Patronengehäuses 20. Um das Anbringen des Schweißpunktes 40 im oberen Bereich des Patronengehäuses 20 zu ermöglichen, kann das Patronengehäuse 20 auf seiner Oberseite eine entsprechende Vertiefung aufweisen, die bei einer 3 mm geringeren Bauhöhe des Trockenmittelbehälters 18 beispielsweise 3 mm tief sein kann. Die Vertiefung kann beispielsweise kreisrund sein. In der Vertiefung können beispielsweise der oder die Schweißpunkte 40 vorgesehen sein, die das Patronengehäuse 20 mit dem Trockenmittelbehälter 18 fest, das heißt unflexibel oder starr, verbinden. Alternativ ist auch die inverse Ausgestaltung möglich, bei der das Patronengehäuse 20 keine Vertiefung ausweist und stattdessen der Trockenmittelbehälter 18 eine oder mehrere Erhöhungen aufweist, um den Spalt zwischen dem Trockenmittelbehälter 18 und dem Patronengehäuse 20 zu überbrücken. Eine Mischung aus Erhöhungen und Vertiefungen ist ebenfalls möglich. Um hohe Belastungen auf den oder die Schweißpunkte 40 zu vermeiden, können beispielsweise Abstandshalter zwischen dem Trockenmittelbehälter 18 und dem Patronengehäuse 20 vorgesehen sein. Ein Filter 44, das in seiner Ausführung beispielsweise dem aus Figur 1 bekannten Filter 26 entsprechen kann, kann bei der in Figur 2 beschriebenen Ausführungsform im oberen Bereich der Lufttrocknerpatrone 10 unterhalb des Patronengehäuses 20 angeordnet sein. Die aus Figur 1 bereits bekannte Anordnung des Filter 44 im unteren Bereich der Lufttrocknerpatrone 10, nahe der Bodenplatte 28 ist ebenfalls möglich. Die während einer Druckluftförderphase in den oberen Bereich der Lufttrocknerpatrone 10 einströmende Druckluft kann über Öffnungen 42 in den Trockenmittelbehälter 18 eintreten. Analog zu der aus Figur 1 bekannten Ausführungsform kann der Trockenmittelbehälter 18 bei einer entsprechenden Ausführung der Struktur 14 und/oder des Trägers 16 optional sein und bei Bedarf entfallen. Ebenso kann auch der Träger 16 bei entsprechender Ausführung der Struktur 14 optional sein und bei Bedarf entfallen.

Eine in Figur 2 nicht dargestellte weitere Ausführungsform, die ebenfalls ohne das aus Figur 1 bekannte Element 22 auskommt und in weiten Teilen den bereits bekannten Ausführungsformen entspricht, kann beispielsweise durch einen speziellen Trockenmittelbehälter 18 umgesetzt werden. Hierzu können sich im oberen Bereich des Trockenmittelbehälters 18 zinnenförmige Laschen befinden, die bei der Montage des Patronengehäuses 20 an der Innenseite des Deckels des Patronengehäuses 20 nach innen umgebogen werden und auf diese Weise das Element 22 ersetzen können. Da es sich um einzelne zinnenförmige Laschen handelt, zwischen denen Lücken bestehen, ist das Einströmen von Druckluft in den Trockenmittelbehälter 18 gewährleistet. Durch das Umbiegen der Laschen bei der Montage kann der Trockenmittelbehälter 18 und/oder der Träger 16 und/oder die Struktur 14 in der Lufttrocknerpatrone 10 fixiert und somit vor Vibrationen geschützt werden.

Figur 3 zeigt ein zweidimensionales Schnittbild durch die weitere Lufttrocknerpatrone. In Figur 3 ist exemplarisch eine mögliche Luftführung innerhalb der Lufttrocknerpatrone 10 während einer Druckluftförderphase durch die Pfeile angedeutet. Einströmende Druckluft 46 kann zunächst an der äußeren Öffnung 36 durch die Bodenplatte 28 in die Lufttrocknerpatrone 10 einströmen. Diese Druckluft kann anschließend innerhalb der Lufttrocknerpatrone 10 radial zuerst nach außen und dann zwischen dem Patronengehäuse 20 und dem Trockenmittelbehälter 18 nach oben strömen. Zu diesem Zweck kann der Außendurchmesser des Trockenmittelbehälters 18 kleiner als der Innendurchmesser des Patronengehäuses 20 sein. Im oberen Bereich der Lufttrocknerpatrone 10 kann die Druckluft umgelenkt werden und in den Trockenmittelbehälter 18 eintreten. Bei der in Figur 3 dargestellten Ausführungsform ist das Filter 44 oberhalb von der Struktur 14 angeordnet und kann auf dieser aufliegen. Nach dem Eintreten der Druckluft in den Trockenmittelbehälter 18 kann die Druckluft zunächst durch das Filter 44 strömen. Anschließend kann die Druckluft in axialer Richtung nach unten durch die axial durchströmbare Struktur 14 strömen. Nach dem Austreten aus der Struktur 14 kann die Druckluft den Trockenmittelbehälter 18 und die Lufttrocknerpatrone 10 durch die zentrale Öffnung 38 als ausströmende Druckluft 48 wieder verlassen. Die ausströmende Druckluft 48 ist aufbereitet.

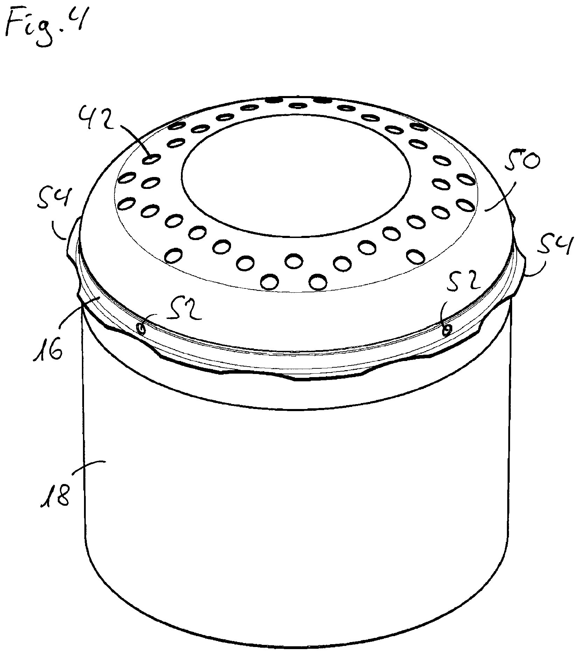

Figur 4 zeigt eine dreidimensionale Ansicht eines Trockenmittelbehälters. Der in Figur 4 dargestellte Trockenmittelbehälter 18 umfasst den Träger 16, den er fast vollständig aufnimmt, und einen Deckel 50 mit Öffnungen 42, durch die Druckluft in den Trockenmittelbehälter 18 eintreten kann. Der in Figur 4 dargestellte Trockenmittelbehälter 18 kann beispielsweise zusammen mit den aus den Figuren 2 und 3 bekannten Ausführungsformen verwendet werden. An dem Träger 16 sind Fixierungen 52 erkennbar, die zur Fixierung der in Figur 4 nicht sichtbaren Struktur 14 vorgesehen sein können. Die Fixierungen 52 können beispielsweise Rastnasen und/oder Schweißpunkte und/oder andere geeignete Befestigungsmittel umfassen. Weiterhin kann der Träger 16 umlaufend mehrere Abstandshalter 54 umfassen, die zur Zentrierung des Trockenmittelbehälters 18 bei und nach der Montage und zur Druckentlastung der festen Verbindung zwischen dem Trockenmittelbehälter 18 und dem Patronengehäuse 20 vorgesehen sein können. Die Abstandshalter 54 können sich zu diesem Zweck in radialer Richtung erstrecken. Die Abstandhalter 54 können je nach Bedarf auch zusätzlich oder alternativ an dem eigentlichen Trockenmittelbehälter 18 und/oder dem Deckel 50 und/oder der Struktur 14 angeordnet sein.

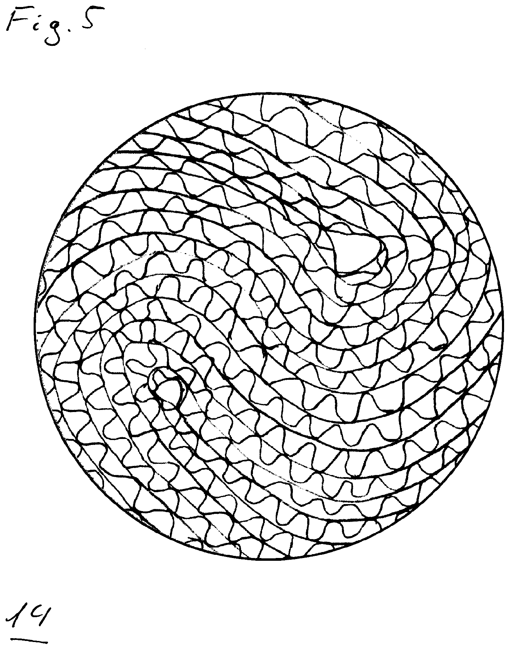

Figur 5 zeigt ein zweidimensionales Schnittbild durch eine Struktur. Der in Figur 5 dargestellte Schnitt verläuft horizontal durch die axial durchströmbare Struktur 14. Die Struktur 14 kann beispielsweise, wie in Figur 5 dargestellt, durch eine Anordnung von beschichteten Platten in Form von Blechlagen realisiert sein, bei der immer eine strukturierte, das heißt insbesondere gewellte, Blechlage auf eine glatte Blechlage folgt. Dieser Aufbau der Struktur 14 kann als wellpappenartig bezeichnet werden. Durch diesen Aufbau kann eine gute axiale Durchströmbarkeit der Struktur 14 bei gleichzeitig großer beschichtbarer/beschichteter Oberfläche der Struktur 14 erreicht werden. Bei der in Figur 5 dargestellten Struktur können die Blechlagen zu einer S-förmigen Struktur gebogen oder gerollt sein.

Die Blechlagen können allerdings auch in anderen geeigneten Weisen geschichtet/angeordnet sein, um den zur Verfügung stehenden Raum optimal zu füllen. Beispielsweise könnte auch eine spiralförmige Anordnung verwendet werden. Allgemein formuliert kann die Ausgestaltung der Struktur 14 in einer Schnittebene beliebige Parkettierungen umfassen, das heißt beliebige lückenlose und überlappungsfreie Überdeckungen der Schnittebene durch gleichförmige oder ungleichförmige Teilflächen, wobei die Ränder der Teilflächen die mit dem Trockenmittel beschichteten Oberflächen darstellen. Beispiele hierfür sind ein Dreiecksgitter, ein Quadratgitter und ein Sechseckgitter sowie die archimedischen und/oder nicht archimedischen und/oder aperiodischen Parkettierungen. Die Blechlagen können vor oder nach dem Zusammenfassen zu der Struktur 14 mit dem Trockenmittel beschichtet werden.

Die Struktur 14 kann anstatt aus Blechlagen zumindest teilweise als eine gesinterte Struktur 14 aufgebaut sein, insbesondere kann sie als eine axial durchströmbare Gitterstruktur gesintert werden, auf die das Trockenmittel aufgebracht werden kann. Der Querschnitt der axial durchströmbaren Kanäle beziehungsweise die Gesamtoberfläche der Struktur 14 kann so gewählt werden, dass bei einem vorgegebenen Volumen eine ausreichende Trocknungsleistung erzielt wird. Eine zumindest teilweise asymmetrische/aperiodische offenporige Sinterstruktur, die einem offenporigen Schwamm ähneln kann, ist in diesem Zusammenhang denkbar. Möglich ist auch die Struktur 14 zumindest teilweise wollknäuelartig aus beschichtetem Draht aufzubauen.

Figur 6 zeigt eine schematische Darstellung eines Nutzfahrzeugs 34. Das dargestellte Nutzfahrzeug 34 kann eine Luftaufbereitungsanlage 12 umfassen. An der dargestellten Luftaufbereitungsanlage 12 kann eine Lufttrocknerpatrone 10 montierbar sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Lufttrocknerpatrone
- 12: Luftaufbereitungsanlage
- 14: Struktur
- 16: Träger
- 18: Trockenmittelbehälter
- 20: Patronengehäuse
- 22: Element
- 24: erste Dichtung
- 26: Filter
- 28: Bodenplatte
- 30: zweite Dichtung
- 32: dritte Dichtung
- 34: Nutzfahrzeug
- 36: äußere Öffnung
- 38: zentrale Öffnung
- 40: Schweißpunkt
- 42: Öffnung
- 44: Filter
- 46: einströmende Druckluft
- 48: ausströmende Druckluft
- 50: Deckel
- 52: Fixierung
- 54: Abstandshalter

## Patentansprüche

1. Lufttrocknerpatrone (10) für eine Luftaufbereitungsanlage (12), insbesondere für eine Druckluftaufbereitungsanlage eines Nutzfahrzeugs, mit einem Trockenmittel, **dadurch gekennzeichnet, dass** das Trockenmittel als eine Beschichtung einer Struktur (14) im Inneren der Lufttrocknerpatrone (10) angeordnet ist.

2. Lufttrocknerpatrone (10) nach Anspruch 1, **dadurch gekennzeichnet, dass** die Struktur (14) von Luft durchströmbar ist.

3. Lufttrocknerpatrone (10) nach Anspruch 1 oder 2, **dadurch gekennzeichnet, dass** die Struktur (14) offenporige Teile umfasst.

4. Lufttrocknerpatrone (10) nach einem der vorhergehenden Ansprüche, **dadurch gekennzeichnet, dass** die Struktur (14) Platten umfasst.

5. Lufttrocknerpatrone (10) nach einem der vorhergehenden Ansprüche, **dadurch gekennzeichnet, dass** die Struktur (14) Draht umfasst.

6. Lufttrocknerpatrone (10) nach einem der vorhergehenden Ansprüche, **dadurch gekennzeichnet, dass** die Lufttrocknerpatrone (10) einen Träger (16) zum Fixieren der Struktur (14) umfasst.

7. Lufttrocknerpatrone (10) nach einem der vorhergehenden Ansprüche, **dadurch gekennzeichnet, dass** die Lufttrocknerpatrone (10) einen Trockenmittelbehälter (18) zur Aufnahme der Struktur (14) umfasst.

8. Lufttrocknerpatrone (10) nach einem der vorhergehenden Ansprüche, **dadurch gekennzeichnet, dass** die Lufttrocknerpatrone (10) ein Element (22) umfasst, das die Struktur (14) in der Lufttrocknerpatrone (10) direkt oder indirekt fixiert.

9. Lufttrocknerpatrone (10) nach einem der vorhergehenden Ansprüche, **dadurch gekennzeichnet, dass** das Trockenmittel einen Zeolith umfasst.

10. Verfahren zur Herstellung einer Lufttrocknerpatrone (10) gemäß einem der vorhergehenden Ansprüche, **dadurch gekennzeichnet, dass** eine Struktur (14) mit einem Trockenmittel beschichtet wird.

## Claims

1. Air dryer cartridge (10) for an air treatment system (12), in particular for a compressed-air treatment system of a commercial vehicle, having a desiccant, **characterised in that** the desiccant is arranged as a coating of a structure (14) in the interior of the air dryer cartridge (10).

2. Air dryer cartridge (10) according to claim 1, **characterised in that** air can flow through the structure (14).

3. Air dryer cartridge (10) according to claim 1 or 2, **characterised in that** the structure (14) comprises open-pored parts.

4. Air dryer cartridge (10) according to any of the preceding claims, **characterised in that** the structure (14) comprises plates.

5. Air dryer cartridge (10) according to any of the preceding claims, **characterised in that** the structure (14) comprises wire.

6. Air dryer cartridge (10) according to any of the preceding claims, **characterised in that** the air dryer cartridge (10) comprises a support (16) for fixing the structure (14).

7. Air dryer cartridge (10) according to any of the preceding claims, **characterised in that** the air dryer cartridge (10) comprises a desiccant container (18) for accommodating the structure (14).

8. Air dryer cartridge (10) according to any of the preceding claims, **characterised in that** the air dryer cartridge (10) comprises an element (22) which directly or indirectly fixes the structure (14) in the air dryer cartridge (10).

9. Air dryer cartridge (10) according to any of the preceding claims, **characterised in that** the desiccant comprises a zeolite.

10. Method for producing an air dryer cartridge (10) according to any of the preceding claims, **characterised in that** a structure (14) is coated with a desiccant.

## Revendications

1. Cartouche (10) de sécheur d'air d'un système (12) de traitement d'air, notamment d'un système de traitement d'air comprimé d'un véhicule utilitaire, comprenant un agent dessiccateur, **caractérisé en ce que** l'agent dessiccateur est disposé sous la forme d'un revêtement d'une structure (14) à l'intérieur de la cartouche (10) de sécheur d'air.

2. Cartouche (10) de sécheur d'air suivant la revendication 1, **caractérisée en ce que** la structure (14) peut être traversée par de l'air.

3. Cartouche (10) de sécheur d'air suivant la revendication 1 ou 2, **caractérisée en ce que** la structure (14) comprend des parties à pores ouverts.

4. Cartouche (10) de sécheur d'air suivant l'une des revendications précédentes, **caractérisée en ce que** la structure (14) comprend des plaques.

5. Cartouche (10) de sécheur d'air suivant l'une des revendications précédentes, **caractérisée en ce que** la structure (14) comprend du fil métallique.

6. Cartouche (10) de sécheur d'air suivant l'une des revendications précédentes, **caractérisée en ce que** la cartouche (10) de sécheur d'air comprend un support (16) pour immobiliser la structure (14).

7. Cartouche (10) de sécheur d'air suivant l'une des revendications précédentes, **caractérisée en ce que** la cartouche (10) de sécheur d'air comprend, pour loger la structure (14), un récipient (18) d'agent dessiccateur.

8. Cartouche (10) de sécheur d'air suivant l'une des revendications précédentes, **caractérisée en ce que** la cartouche (10) de séchage d'air comprend un élément (22), qui immobilise directement ou indirectement la structure (14) dans la cartouche (10) de sécheur d'air.

9. Cartouche (10) de sécheur d'air suivant l'une des revendications précédentes, **caractérisée en ce que** l'agent dessiccateur comprend un zéolithe.

10. Procédé de production d'une cartouche (10) de sécheur d'air suivant l'une des revendications précédentes, **caractérisé en ce que** l'on revêt une structure (14) d'un agent dessiccateur.
